# EUROPEAN PATENT SPECIFICATION

(11) **EP 4 028 741 B1**
(45) Date of publication and mention of the grant of the patent: **12.06.2024**
(21) Application number: 20862339.7
(22) Date of filing: 09.09.2020
(51) Int. Cl.: G01M 3/08, F16K 37/00

(54) **TEST UNIT AND METHOD FOR TESTING AN INLET-OUTLET VALVE**
PRÜFEINHEIT UND VERFAHREN ZUM PRÜFEN EINES EINLASS-AUSLASS-VENTILS
UNITÉ DE TEST ET PROCÉDÉ DE TEST D'UNE VANNE ENTRÉE-SORTIE

(30) Priority: 13.09.2019 DK PA201970568
(43) Date of publication of application: 20.07.2022
(60) Divisional application: 24170772.8
(73) Proprietor: IOP Marine A/S, 2605 Brøndby (DK)
(72) Inventor: SOWINSKI, Grzegorz, 2000 Frederiksberg (DK)
(74) Representative: Nordic Patent Service A/S
(86) International application number: PCT/DK2020/050246
(87) International publication number: WO 2021/047744

(56) References cited:
- WO-A1-2013/068090
- WO-A1-2013/124035
- US-A1- 2014 318 221
- US-A1- 2015 007 639
- US-A1- 2018 112 796

## Description

### TECHNICAL FIELD

The disclosure relates to a method for testing an inlet-outlet valve, such as an inlet-outlet normally open valve, which may be used for opening and closing for passage of a liquid gas, such as a liquified petroleum gas.

### BACKGROUND

WO 2013/124035 and US 2015/007639 A1 disclose a method and a system for testing a gas shut-down valve for a combustion engine, wherein the valve is placed in a chamber of a holder and the valve in closed condition is influenced by a non-burnable test gas under pressure to check whether the valve seat and the sealing ring of the valve are close. For the disclosed valve test, the valve with the surrounding sealing ring is placed in a chamber of a holder so that the chamber due to the sealing ring is divided into a first portion and a second portion including the valve seat, and the valve is in closed condition influenced by a non- burnable gas under pressure, the test gas being supplied to the second portion of the chamber. As a result, the test gas can seep into the first portion of the chamber if the valve seat and/or the sealing ring are leaky. The test gas may be supplied to the second portion of the chamber at a pressure of about 300 bar, the rest of the valve being supplied with sealing oil at a pressure higher than the gas pressure. As a result, the test gas is prohibited from entering the valve.

US 2014/318221 A1 discloses a method and a system for testing a gas injection valve for a combustion engine, wherein the valve is placed in a holder having a first chamber and a second chamber. The valve spraying nozzle of the valve is placed in the first chamber and the valve in closed condition is influenced by a non-burnable test gas under pressure to check whether the valve seat and the valve gaskets are close. The gas which during the supply of gas escapes at the valve seat, is detected separately, eventually through a gas discharge tube, which from the first chamber is connected to a separate container with liquid, and the gas which during the supply of gas escapes as a result of leaky valve gaskets is detected separately, eventually through a gas discharge tube connected to the valve, which gas discharge tube is connected to a second container with liquid.

A new inlet-outlet normally open valve unit for opening or closing for a liquid gas supplied to the valve has been developed by MAN Energy Solutions. An electro-magnetic valve opens or closes for supply of pressurized control oil to the valve. When no voltage is supplied, the electro-magnetic valve closes for supply of control oil, and the inlet-outlet valve is in its normally open position allowing a liquid gas to pass the valve. When the electro-magnetic valve is activated by supply of a voltage, the electro-magnetic valve opens for supply of control oil, whereby the inlet-outlet valve closes for the liquid gas to pass the valve. When the valve is in this closed position, the valve may open for passage of the liquid gas, if the liquid gas is supplied at a pressure being above a gas opening pressure, for which the closed valve opens for passage of liquid through the valve. The gas opening pressure will be a function of the pressure of the supplied control oil.

Thus, there is a need for testing that the inlet-outlet valve opens when the pressure of the supplied liquid gas increases above the gas opening pressure.

### SUMMARY

It is an object of the present disclosure to provide an opening test of an inlet-outlet valve, such as an inlet-outlet normally open valve.

This object is achieved in accordance with the invention defined in claim 1 by providing a method of testing an inlet-outlet valve being part of a valve unit, such as an inlet-outlet normally open valve unit, with the inlet-outlet valve being placed in a test chamber of a test unit, wherein the inlet-outlet valve has:
an inlet-outlet valve body surrounding an inlet-outlet valve piston chamber with a valve inlet opening at the bottom, which inlet-outlet valve piston chamber holds an inlet-outlet valve spring and a piston with a piston valve seat formed at a lower end of the inlet-outlet valve piston, said valve body having one or more lower valve outlet channels providing a fluid connection from outer wall parts of a lower valve body part to the inlet-outlet valve piston chamber; a lower valve body sealing ring provided at the bottom of the valve body and surrounding the valve inlet opening; and a middle valve body sealing ring provided at and surrounding a middle part of the valve body above the outlet channels;
wherein the valve body with the lower and middle sealing rings is placed in the test chamber with the bottom valve inlet opening facing a test gas outlet at the bottom of the test chamber, whereby a lower fluid space is provided in the test chamber, said lower fluid space being sealed by the lower and middle valve body sealing rings and being fluidly connected to the valve outlet channels, and said test gas outlet and the valve inlet opening being fluidly sealed from the lower fluid space by the lower valve body sealing ring;
wherein the test unit holds a lower gas leak port being fluidly connected to the lower fluid space;
wherein the test unit is configured for receiving a test gas and supplying the test gas to the valve inlet opening via the test gas outlet to thereby exercise an upwards pressure on the piston valve seat as a function of a pressure of the supplied test gas;
wherein the valve unit is configured for receiving a control oil and providing a downwards pressure on the inlet-outlet valve piston;
wherein the inlet-outlet valve is open when the piston valve seat is lifted above the outlet channels to provide a fluid connection from the valve inlet opening to the outer wall parts of the valve body and the inlet-outlet valve is closed when the piston valve seat is pressed below the outlet channels;
wherein the test unit is configured for supplying the test gas to thereby exercise the upwards pressure on the piston valve seat within the inlet-outlet valve piston chamber;
wherein the valve unit is configured for providing the downwards pressure on the inlet-outlet valve piston holding the piston valve seat within the inlet-outlet valve piston chamber as a function of a pressure of the received control oil; and
wherein said method of testing the inlet-outlet valve comprises a first opening test of the inlet-outlet valve, which first opening test comprises:
   supplying control oil at a first control oil pressure to the valve unit, said first control oil pressure being high enough for the valve unit to close the inlet-outlet valve by moving the piston valve seat downwards below the outlet channels;
   supplying a test gas at a first closure gas pressure to the valve inlet opening (8) via the test gas outlet of the test unit, said first closure gas pressure being below a first gas opening pressure for the which the inlet-outlet valve is configured to start opening by moving the piston valve seat above the outlet channels when the control oil is supplied to the valve unit at the first control oil pressure;
   increasing the test gas supply pressure from the first closure gas pressure until the pressure reaches the first gas opening pressure; and
   checking the amount of test gas reaching out through the lower gas leak port.

If the inlet-outlet valve starts opening by the increase in the supplied test gas pressure, the test gas may reach out through the lower gas leak port by passing the valve seal into the valve outlet channels and then into the lower fluid space and out through the lower gas leak port. If no increase in the output of test gas is observed, then the inlet-outlet valve fails in opening.

In a possible implementation form, the method further comprises a second opening test of the inlet-outlet valve, which second opening test comprises:
supplying control oil to the valve unit at a second control oil pressure being different to the first control oil pressure;
supplying test gas to the valve inlet opening via the test gas outlet at a second closure gas pressure, said second closure gas pressure being below a second gas opening pressure for the which the inlet-outlet valve is configured to start opening when the control oil is supplied at the second oil pressure;
increasing the test gas supply pressure from the second closure gas pressure until the pressure reaches the second gas opening pressure; and
checking the amount of test gas reaching out through the lower gas leak port.

In a possible implementation form, the second control oil pressure is lower than the first control oil pressure, such as in the range of 60 to 80% of the first control oil pressure. In another possible implementation form of the second aspect, the first control oil pressure is lower than the second control oil pressure, such as in the range of 60 to 80% of the second control oil pressure.

In a possible implementation form, the first closure gas pressure is not lower than 90%, such as not lower than 95% of the first gas opening pressure.

In a possible implementation form, the second closure gas pressure is not lower than 90%, such as not lower than 95% of the second gas opening pressure.

In a possible implementation form, the first control oil pressure is 300 bar. The first closure gas pressure may be below or equal to 200 bar. In a possible implementation form of the second aspect the first gas opening pressure is 207 bar. In a possible implementation form of the second aspect, the second control oil pressure is 225 bar. The second closure gas pressure may be below or equal to 140 bar. In a possible implementation form of the second aspect, the second gas opening pressure is 149 bar.

In a possible implementation form, the first control oil pressure is 225 bar. The first closure gas pressure may be below or equal to 140 bar. In a possible implementation form of the second aspect the first gas opening pressure is 149 bar. In a possible implementation form of the second aspect, the second control oil pressure is 300 bar. The second closure gas pressure may be below or equal to 200 bar. In a possible implementation form of the second aspect, the second gas opening pressure is 207 bar.

In a possible implementation form, the valve unit is fluidly connected to an electromagnetic valve for the supply of control oil, and the electro-magnetic valve is configured for opening for the supply of control oil to the valve unit when activated and for closing for the supply of control oil to the valve unit when de-activated.

In a possible implementation form, the electro-magnetic valve is activated by applying 24 V direct current to thereby open for the supply of control oil to the valve unit.

In a possible implementation form, the valve unit comprises a top cover holding a cover piston chamber with a cover piston, which cover piston chamber is fluidly connected to the electro-magnetic valve for receiving the control oil, and which cover piston reaches out from the cover piston chamber to a top part of the inlet-outlet valve piston, whereby when the electro-magnetic valve is activated and control oil is supplied at a control oil pressure to the cover piston chamber, a downwards pressure is exercised by the cover piston on the inlet-outlet valve piston holding the piston valve seat within the inlet-outlet valve piston chamber.

In a possible implementation form, a stop valve is fluidly connected to the lower gas leak port for closing an opening for gas outlet from the lower gas leak port.

In a possible implementation form, a flexible hose is fluidly connected to the stop valve and further connected to a separate container with liquid, whereby any test gas reaching through the lower gas leak port when the ball valve is open is observed as bubbles in the liquid of the container.

In a possible implementation form, the test gas in a non-burnable gas, such as Nitrogen.

The foregoing and other objects are achieved by the features of the independent claims. Further implementation forms are apparent from the dependent claims, the description and the figures. These and other aspects of the invention will be apparent from the embodiments described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 a perspective view of an inlet-outlet valve unit when placed in a test unit according to an example embodiment;
Fig. 2 is a longitudinal sectional view of the inlet-outlet valve unit and the test unit of Fig. 1 according to an example embodiment;
Fig. 3 is a longitudinal sectional view of the inlet-outlet valve unit and the test unit of Figs. 1 and 2 when turned 90 degrees according to an example embodiment;
Fig. 4 is an amplified view of a lower part of the longitudinal sectional view of the inlet-outlet valve unit and the test unit of Fig. 3 according to an example embodiment;
Fig. 5 is an amplified view of a detail in Fig. 4 according to an example embodiment;
Fig. 6 a perspective view of the inlet-outlet open valve unit of Fig. 1 alone according to an example embodiment;
Fig. 7 is a longitudinal sectional view of the inlet-outlet valve unit of Fig. 6, with the sectional view taken at a first distance to a centre axis of the valve unit, according to an example embodiment;
Fig. 8a is a longitudinal sectional view of the inlet-outlet valve unit of Fig. 6, with the sectional view taken at a second distance to a centre axis of the valve unit, according to an example embodiment;
Fig. 8b is a longitudinal sectional view of a lower oil drainage part of the inlet-outlet valve unit of Fig. 6 according to an example embodiment; and
Fig. 9 is a diagram of a test system with lines for supply of control oil and test gas for testing the inlet-outlet valve unit of Fig. 1 according to an example embodiment.

### LIST OF REFERENCE NUMBERS FOR THE DRAWINGS

| | |
|---|---|
| Valve unit | 1 |
| | |
| Inlet-outlet valve body | 2 |
| Upper valve body part | 3 |
| Middle valve body part | 4 |
| Lower valve body part | 5 |
| Inlet-outlet valve piston chamber | 6 |
| Upper opening | 7 |
| Valve inlet opening | 8 |
| Inlet-outlet valve spring | 9 |
| Inlet-outlet valve piston | 10 |
| Piston valve seat | 11 |
| Lower valve outlet channels | 12 |
| Test channels | 13 |
| Lower valve body sealing ring | 14 |
| Middle valve body sealing ring | 15 |
| Upper valve body sealing ring | 16 |
| Lower piston sealing ring | 17 |
| Upper piston sealing ring | 18 |
| | |
| Top cover | 19 |
| Cover piston chamber | 20 |
| Cover piston | 21 |
| Cover fluid channel | 22a |
| Cover fluid release channel | 22b |
| Lower oil supply part | 23 |
| Valve oil supply chamber | 24 |
| Upper valve oil supply channel | 25a |
| Lower valve oil supply channel | 25b |
| Lower oil drainage part | 26 |
| Valve oil drainage chamber | 27 |
| Valve oil drainage channel | 28 |
| | |
| Electro-magnetic valve fluid inlet | 29 |
| Electro-magnetic valve fluid outlet | 30a |
| Electro-magnetic valve drainage outlet | 30b |
| Electro-magnetic valve | 31 |
| On/off contact | 32 |
| | |
| Test unit | 33 |
| Test chamber | 34 |
| Lower fluid space | 35 |
| Upper fluid space | 36 |
| Test gas inlet port | 37 |
| Bottom test gas channel | 38 |
| Bottom test gas chamber | 39 |
| Bottom test gas outlet | 40 |
| Lower gas leak channel | 41a |
| Lower gas leak port | 41b |
| Upper gas leak channel | 42 |
| Upper gas leak port | 43 |
| Control oil inlet port | 44 |
| Control oil supply channel | 45 |
| Control oil supply chamber | 46 |
| Control oil drainage port | 47 |
| Control oil drainage channel | 48 |
| Control oil drainage chamber | 49 |
| | |
| Oil drainage pipe | 50 |
| Separate container | 51 |
| Upper flexible hose | 52 |
| Leakage gas pipe | 53a |
| Stop valve | 53b |
| Leakage gas outlet | 54 |
| Lower flexible hose | 55 |
| Non-return valve | 56 |
| Silencer | 57 |
| | |
| Test system | 100 |
| Gas inlet | 100a |
| Air inlet | 100b |
| Gas outlet | 100c |
| Control oil outlet | 100d |
| Sealing oil outlet | 100e |
| Fuel oil outlet | 100f |
| Control oil directional valve | 101 |
| Control oil pressure relief valve | 102 |
| Control oil stop valve | 103 |
| Control oil pressure safety valve | 104 |
| Hydraulic accumulator | 105 |
| Control oil pressure gauge | 106 |
| Control oil air driven pump | 107 |
| Control oil pressure control valve | 108 |
| Oil tank | 109 |
| Gas stop valve | 110 |
| Gas pressure relief valve | 111 |
| Gas pressure control valve | 112 |
| Gas pressure gauge | 113 |
| Sealing oil pressure relief valve | 114 |
| Sealing oil pressure control valve | 115 |
| Sealing oil pressure safety valve | 116 |
| Sealing oil pressure gauge | 117 |
| Sealing oil air driven pump | 118 |
| Fuel oil pressure relief valve | 119 |
| Fuel oil pressure control valve | 120 |
| Fuel oil pressure safety valve | 121 |
| Fuel oil pressure gauge | 122 |
| Fuel oil air driven pump | 123 |

### DETAILED DESCRIPTION

An inlet-outlet normally open valve unit for opening or closing for passage of a liquid gas according to a preferred embodiment is designed by MAN Energy Solutions for a twostroke combustion engine. The engine is a duel fuel engine, which can run on standard heavy fuel oil or on a liquified petroleum gas, LPG, which for example may propane, butane or a mix of propane and butane.

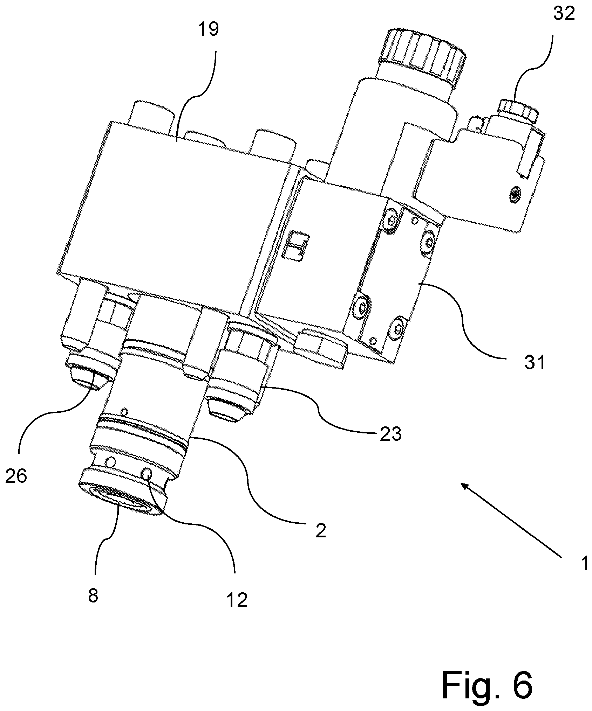

Such an inlet-outlet normally open valve unit 1 is illustrated in Fig. 6 and holds an inlet-outlet valve having a valve body 2 with a valve inlet opening 8 for inlet of a liquid gas and a lower valve outlet channels 22 for outlet of liquid gas, a top cover 19 with a lower oil supply part 23 for inlet of a control oil and a lower oil drainage part 26 for outlet of control oil, and an electro-magnetic directional valve 31, which electro-magnetic valve 31 acts as a valve for opening and closing for a supply of control oil to the inlet-outlet valve. The electro-magnetic valve 31 is activated by an on/off contact 32 and is active open by supply of a direct current voltage and non-active closed when the voltage supply is cut off.

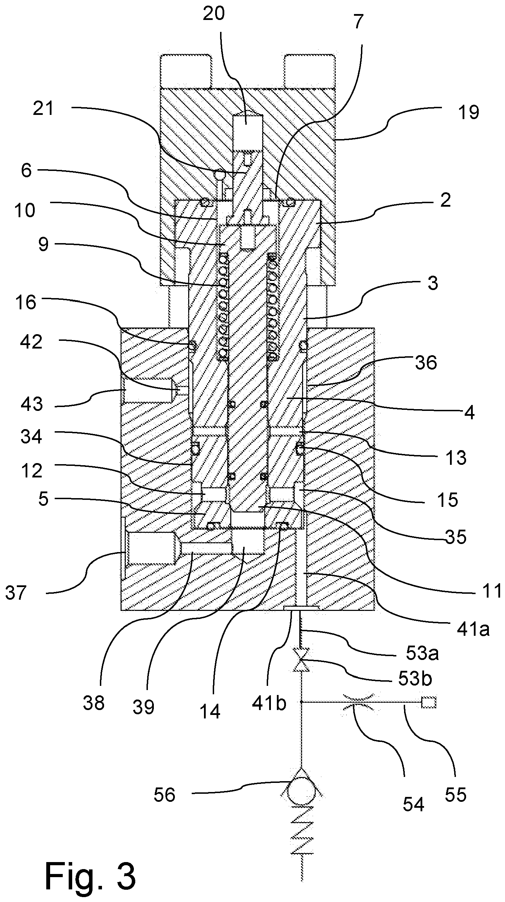

When the electro-magnetic valve 31 is active open by supply of a direct current voltage, the electro-magnetic valve 31 is open and allows a supplied pressurized control oil to pass from the oil supply part 23 into the top cover 19 to thereby provide a downwards pressure on a piston 10, see Fig. 3, of the inlet-outlet valve for closing a fluid supply from the valve inlet opening 8 to the valve outlet channels 22, when liquid gas is supplied to the inlet opening 8 at a pressure being below a gas opening pressure, for which the inlet-outlet valve is configured to open. The liquid gas supplied to the inlet opening 8 provides an upwards pressure on the inlet-outlet valve piston 10, and the when the pressure of the supplied liquid gas exceeds the gas opening pressure, the valve piston 10 is moved upwards and opens for a fluid connection from the inlet 8 to the outlet channels 12. The gas opening pressure is a function of the pressure of the supplied control oil. Thus, a higher control oil pressure results in a higher gas opening pressure.

When the electro-magnetic valve 31 is non-active closed by disconnecting the supply of direct current voltage, the electro-magnetic valve 31 closes for the supply of pressurized control oil to the oil supply part 23 into the top cover 19, whereby there is no downwards pressure on the valve piston 10, and the inlet-outlet valve is open for a fluid supply from the valve inlet opening 8 to the valve outlet channels 22. This is the normal operation mod of the valve 1, hence the term an "Inlet-outlet normally open valve" is used.

However, when the inlet-outlet valve of the valve unit 1 is closed for fluid supply from the valve inlet opening 8 to the valve outlet channels 12, there is a need for testing that the inlet-outlet valve stays closed without leaks when the liquid gas is supplied to the inlet opening 8 at a pressure being below a predetermined gas opening pressure, and that the valve opens for fluid supply from the valve inlet opening 8 to the valve outlet channels 12 when the pressure of the supplied liquid gas increases above the gas opening pressure.

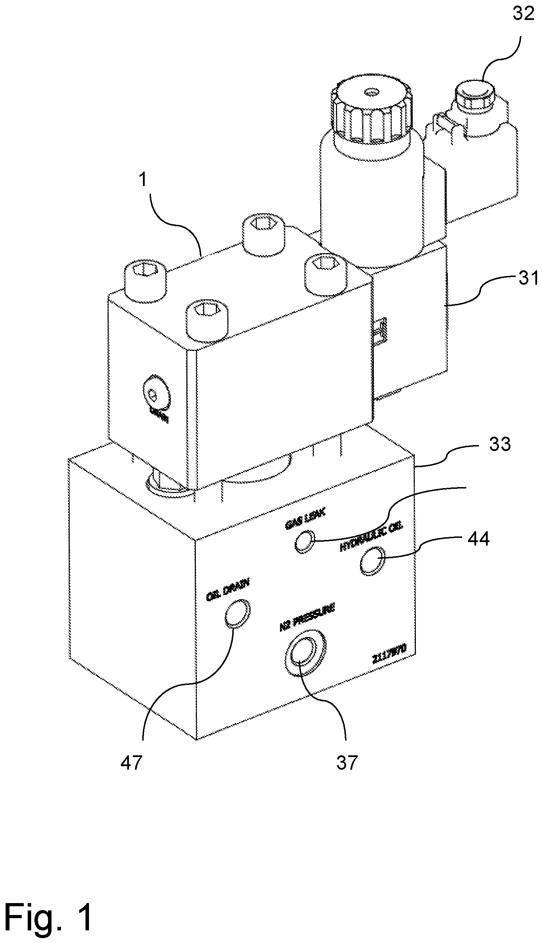

An embodiment of the inlet-outlet normally open valve unit 1 and a test unit 33 used for testing the valve unit 1 are described in the following with reference to Figs. 1 to 9.

The valve unit 1 holds an inlet-outlet valve formed by an inlet-outlet valve body 2 with a top cover 19, while the valve unit 1 further holds an electro-magnetic valve 31 for activating and de-activating the inlet-outlet valve, see Figs. 6, 7 and 8.

The inlet-outlet valve body 2, see Fig. 3, consist of an upper valve body part 3, a middle valve body part 4, and a lower valve body part 5 with the outer cross-sectional area of the lower valve body part 5 being less than the outer cross-sectional area of the middle valve body part 4, and with the outer cross-sectional area of the middle valve body part 4 being less than the outer cross-sectional area of the upper valve body part 3. The valve body 2 surrounds a through-going inlet-outlet valve piston chamber 6 forming an upper opening 7 in the upper valve body part 3 and a valve inlet opening 8 at the bottom in the lower valve body part 5. The inlet-outlet valve piston chamber 6 holds an inlet-outlet valve spring 9 within an upper part of the chamber and an inlet-outlet valve piston 10 with a piston valve seat 11 formed at the lower end of the inlet-outlet valve piston 10.

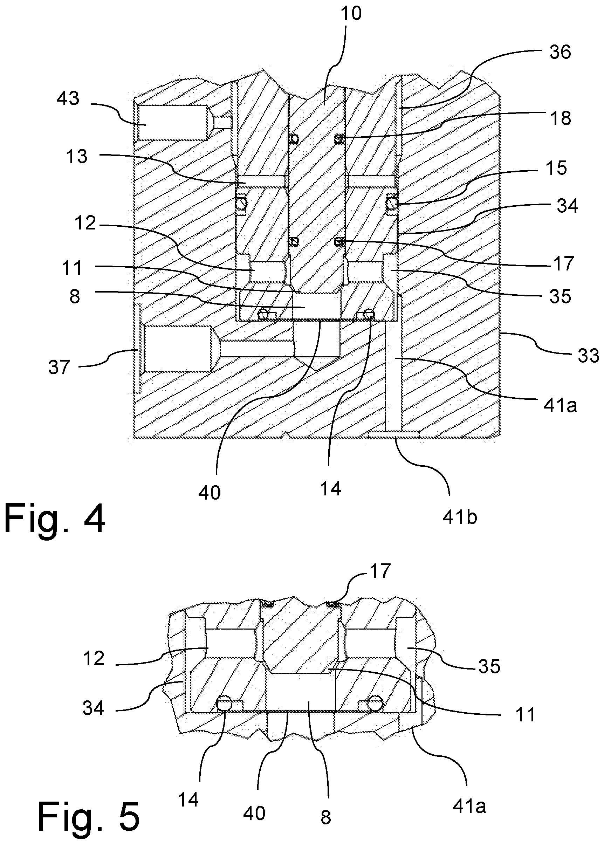

The inlet-outlet valve body 2 holds one or more lower valve outlet channels 12, see Fig. 3, 4 and 5, providing a fluid connection from outer wall parts of the lower valve body part 5 to the inlet-outlet valve piston chamber 6, whereby the inlet-outlet valve is open when the valve seat 11 is lifted above the outlet channels 12 by the force of the inlet-outlet valve spring 9, thereby providing a fluid connection from the valve inlet opening 8 to the outer wall parts of the valve body 2. The inlet-outlet valve is closed when the valve seat 11 is pressed below the outlet channels 12 by a pressure exercised on the inlet-outlet valve piston 10. The valve body 2 also holds one or more test channels 13. See Fig. 3 and 4, providing a fluid connection from the inlet-outlet valve piston chamber 6 to outer wall parts of the middle part 4 of the valve body above 2 the lower valve outlet channels 12.

A lower valve body sealing ring 14, see Figs. 3, 4 and 5, surrounds the valve inlet opening 8 at the bottom of the inlet-outlet valve body 2, a middle valve body sealing ring 15 surrounds the middle part 4 of the valve body below the test channels 13, and an upper valve body sealing ring 16 surrounds an upper part 3 of the valve body above the test channels 13. Lower 17 and upper 18 piston sealing rings are provided for sealing the inlet-outlet valve piston 10 within the inlet-outlet valve piston chamber 6, see Fig. 4, where the lower piston sealing ring 17 is positioned at the inlet-outlet valve piston 10 for being moved within the inlet-outlet valve piston chamber 6 above the lower valve outlet channels 12 and below the test channels 13, and where the upper piston sealing ring 18 is positioned at the inlet-outlet valve piston 10 for being moved within the inlet-outlet valve piston chamber 6 above the test channels 13 and below the inlet-outlet valve spring 9.

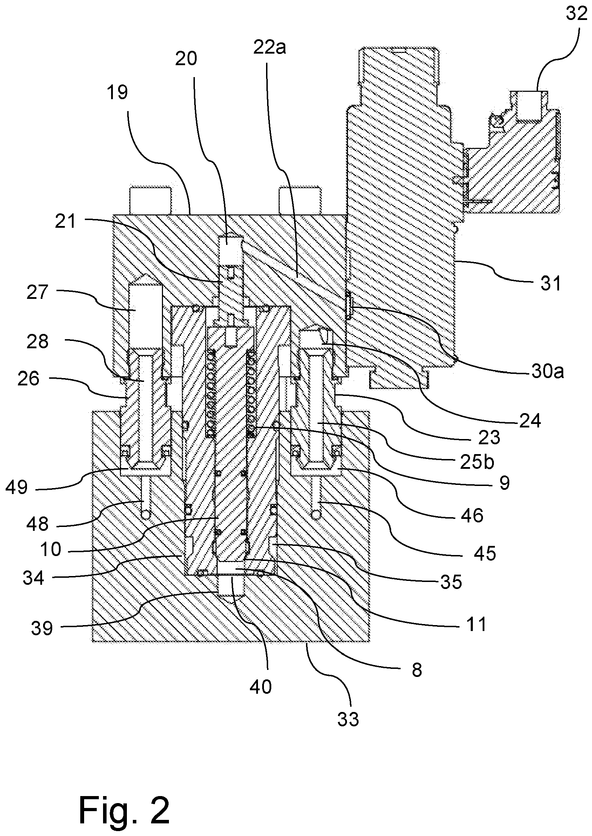

The top cover 19, see Fig. 2, holds a cover piston chamber 20 with a cover piston 21, and a cover fluid channel 22a providing a fluid connection from a side part of the top cover 19 to an upper part of the cover piston chamber 6. At the bottom of the top cover 19, there is provided a lower oil supply part 23 with a valve oil supply chamber 24 in fluid connection with a lower valve oil supply channel 25b and an upper valve oil supply channel 25a. The upper valve oil supply channel provides a fluid connection from the supply chamber 24 to a side part of the top cover 19.

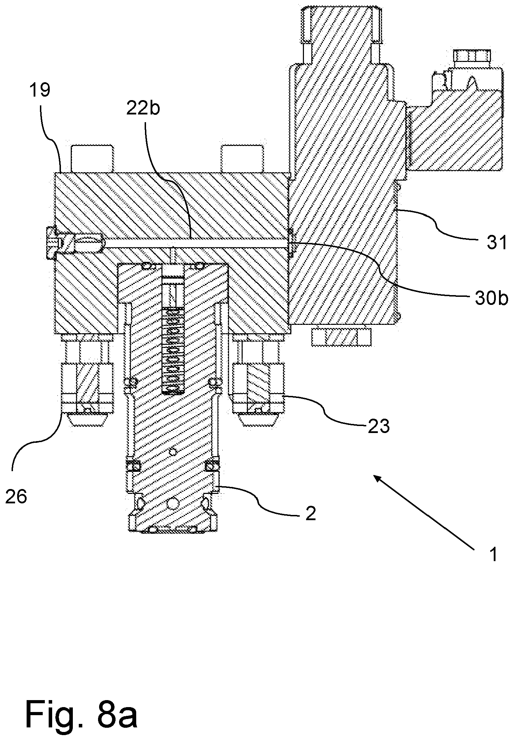

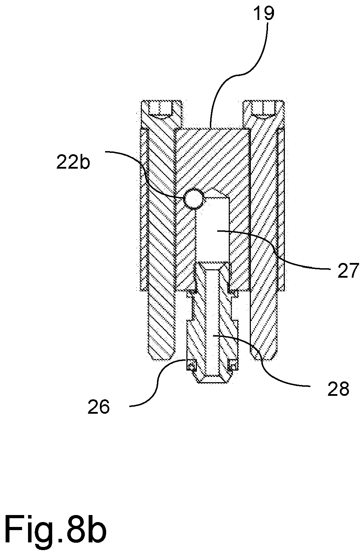

At the bottom of the top cover 19, see Fig. 2, there is also provided a lower oil drainage part 26 with a valve oil drainage chamber 27 in fluid connection with a valve oil drainage channel 28. The top cover also holds a cover fluid release channel 22b, see Fig. 8a and 8b, providing a fluid connection from a side part of the top cover 19 to the valve oil drainage chamber 27.

The top cover 19 is connected to the inlet-outlet valve body 2, see Fig. 2, with the cover piston 21 reaching out from the cover piston chamber 20 to a top end part of the inlet-outlet valve piston 10 whereby a downwards pressure can be provided by the cover piston 21 to the inlet-outlet valve piston 10 for closing the inlet-outlet valve. The lower oil supply part 23 and the lower oil drainage part 26 extend on opposite sides of the upper valve body part 3.

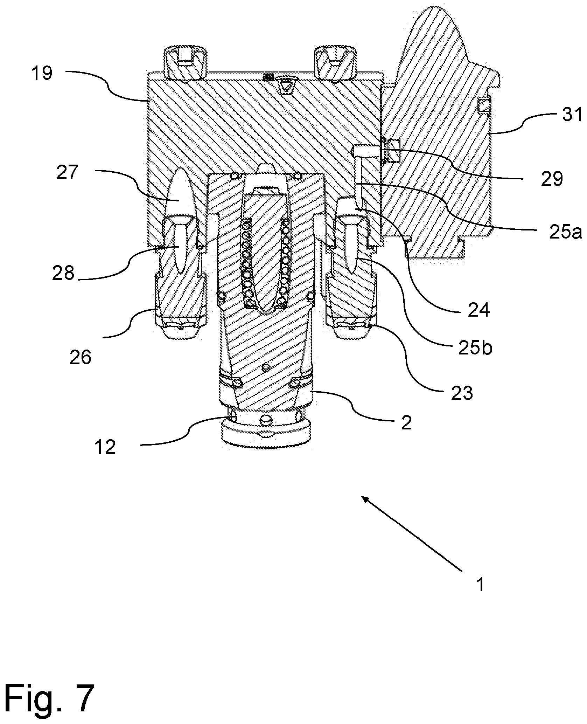

The top cover 19 of the valve unit is fluidly connected to an electro-magnetic valve 31 for control of the supply of control oil, see Figs. 2 and 7,where the electro-magnetic valve 31 is configured for opening for the supply of control oil to the top cover 19 when activated and for closing for the supply of control oil to the top cover when de-activated.

When control oil in the form of hydraulic oil is supplied at a high pressure to the lower oil supply part 23, the oil flows through the lower valve oil supply channel 25b to the valve oil supply chamber 24 and through the upper valve oil supply channel 25a to the electromagnetic directional valve 31 and stops at an electro-magnetic fluid inlet 29 of the electromagnetic valve 31, which is normally closed, see Fig. 7. When activating the electromagnetic valve 31, by applying 24 Volt direct current, DC, to the electro-magnetic directional valve 31, the fluid inlet 29 opens and the hydraulic oil will flow through the inlet 29 and through internal channels (not shown in the figures) of the electro-magnetic directional valve 31 and flows out from an electro-magnetic valve fluid outlet 30a to the cover fluid channel 22a and to the cover piston chamber 20, see Fig. 2, where the hydraulic oil press down the cover piston 21, which again will press down the inlet-outlet valve piston 10 and the piston valve seat 11, while at the same time compressing the inlet-outlet valve spring 9. An electric on/off contact 32 is connected to the electro-magnetic valve 31 for connecting and disconnecting supply of 24 Volt DC to the electro-magnetic valve 31, see Fig. 2.

When de-activating the electro-magnetic valve 31 by disconnecting the 24 Volt DC the hydraulic oil flow will stop at electro-magnetic valve fluid inlet 29. At the same time the hydraulic oil from the cover piston chamber 20 will be released back through the cover fluid channel 22a to the electro-magnetic fluid outlet 30a, see Fig. 2, and through internal channels (not shown in the figures) of the electro-magnetic directional valve 31 to an electro-magnetic valve drainage outlet 30b, and through the cover fluid release channel 22b to the valve oil drainage chamber 27, the valve oil drainage channel 28, see Figs. 8a and 8b. By releasing the oil pressure from the cover piston chamber 20, the inlet-outlet valve spring 9 will push up the inlet-outlet valve piston 10 with piston valve seat 11 and the inlet-outlet valve will open.

The test unit 33, see Figs. 1, 2 and 3, comprises a test chamber 34 with an opening for receiving the inlet-outlet valve body 2. The test chamber 34 is divided in an upper part configured to match the outer cross-sectional area of the upper valve body part 3 and a lower part configured to match the outer cross-sectional area of the middle valve body part 4, where the lower test chamber part has a test gas outlet 40 at the bottom, where the test gas outlet 40 is an upper opening of a test gas chamber 39 provided below the test chamber 34. The test gas outlet 40 is configured to match the bottom valve inlet 8 of the inlet-outlet valve piston chamber 6. The test unit 33 holds a test gas inlet port 37 in fluid connection with the test gas chamber 39 via a bottom test gas channel 38 , and a control oil inlet port 44 in fluid connection with a control oil supply chamber 46 via a control oil supply channel 45, which is configured for receiving the lower oil supply part 23 of the top cover 19. The test unit 33 also holds an oil drainage port 47 in fluid connection with a control oil drainage chamber 49 via a control oil drainage channel 40, where the control oil drainage chamber 49 is configured for receiving the lower oil drainage part 26 of the top cover 19. The test unit 33 further holds an upper gas leak port 43 in fluid connection with the upper part of the test chamber 34 via an upper gas leak channel 42, and a lower gas leak channel 41a providing a fluid connection from a side-bottom part of the lower test chamber part to a lower gas leak port 41b of the test unit 33.

The valve unit 1 is connected to the test unit 33 with the inlet-outlet valve inserted into the test chamber 34 of the test unit 33, whereby the valve body 2 reaches into the test chamber 34 with the bottom valve inlet opening 8 facing the bottom test gas outlet 40 of the test chamber 34. Thus, a fluid connection is provided between the test gas inlet port 37 via the test gas chamber 39 to the valve inlet 8 at the bottom of the inlet-outlet valve piston chamber 6. A lower fluid space 35, see Figs. 3 and 4, is provided between the outer walls of the lower valve body part 5 and the lower part of the test chamber 34 thereby providing a fluid connection from the lower valve outlet channels 12 via the lower gas leak channel 41a to the lower gas leak port 41b. The lower test gas outlet 40 and the valve inlet opening 8 are fluidly sealed from the lower fluid space 35 by the lower valve body sealing ring 14.

The upper valve body part 3 reaches partly into the upper part of the test chamber 34, whereby an upper fluid space 36, see Fig. 3 and 4, is provided between the outer walls of the middle valve body part 4 and the upper part of the test chamber 34 and a fluid connection is provided from the test channels 13 to the upper gas leak port 43. The lower fluid space 35 is sealed by the lower 14 and middle 15 valve body sealing rings, and the upper fluid space 36 is sealed by the middle 15 and upper 16 valve body sealing rings.

The lower oil supply part 23 is received by the control oil supply chamber 46 of the test unit 33, see Figs. 1 and 2, with a fluid connection being provided from the control oil inlet port 44, via the control oil supply chamber 46 and the lower valve oil supply channel 25b to the valve oil supply chamber 24. The lower oil drainage part 26 is received by the control oil drainage chamber 49 of the test unit 33 with a fluid connection being provided from the control oil drainage port 47, via the control oil drainage chamber 49 and the valve oil drainage channel 28 to the valve oil drainage chamber 27.

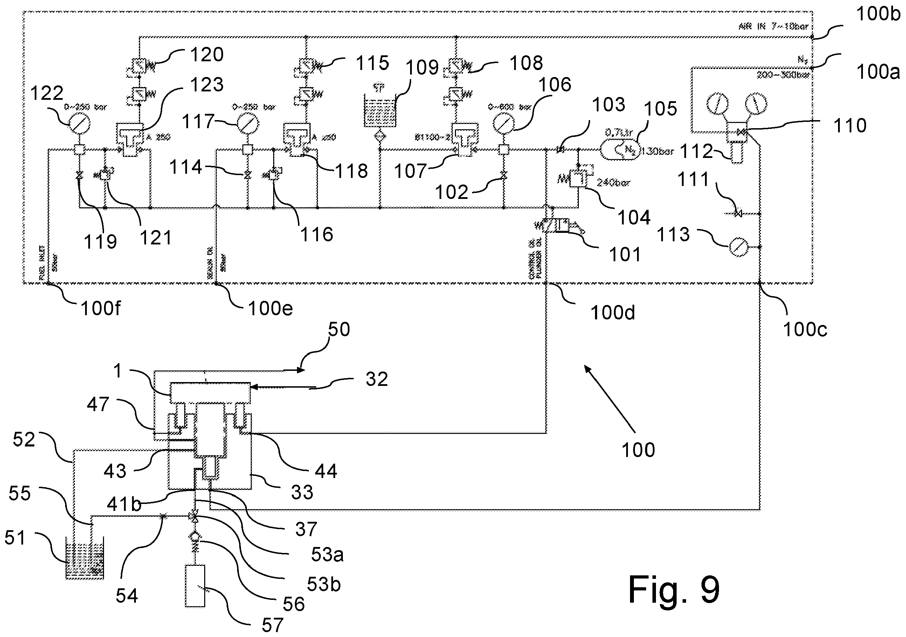

A stop valve 53b, see Figs. 3 and 9, is fluidly connected to the lower gas leak port 41b via a leakage gas pipe 53a for closing and opening for gas being outlet from the lower gas leak port 41b. The stop valve 53b has one outlet connected to one end of a lower flexible hose 55 via a leakage gas outlet 54, which leakage gas outlet 54 has a relatively small diameter, such as 0,3mm, with the other end of the lower flexible hose 55 connected to a separate container 51 with liquid, whereby any test gas reaching through the lower gas leak port 41b when the stop valve 53b is open is observed as bubbles in the liquid of the container 51. A non-return valve 56 is connected to another output of the stop valve 53b. If the pressure of the test gas or Nitrogen being output from the lower gas leak port 41 via the leakage gas outlet 54 exceeds 0,5 bar, the non-return 56 valve will open an allow the test gas to be leaked into a silencer 57, which is connected to the non-return valve 56. Another upper flexible hose 52 is connected to the upper gas leak port 43 and leading into the liquid in the container 51.

Here, the liquid in the container 51 is water, and the test gas is Nitrogen.

Fig. 9 is a diagram of a test system with lines for supply of control oil and test gas for testing the valve unit of Fig. 1 according to an example embodiment.

Fig. 9 is a diagram of a test system 100 with lines for supply of control oil 100d and test gas 100c for performing a leakage test of the inlet-outlet valve of the valve unit 1 of Figs. 1 and 6, for which test the valve unit 1 is inserted into the test unit 33.

For this test, the valve unit 1 is inserted and connected to the test unit 33 as described in connection with Figs.1, 2, 3 and 4. Thus, a stop valve 53b is fluidly connected to the lower gas leak port 41b via a leakage gas pipe 53a. The stop valve 53b has one outlet connected to one end of a lower flexible hose 55 via a leakage gas outlet 54, which leakage gas outlet 54 has a relatively small diameter, such as 0,3mm, with the other end of the lower flexible hose 55 connected to a separate container 51 with liquid, whereby any test gas reaching through the lower gas leak port 41b when the stop valve 53b is open is observed as bubbles in the liquid of the container 51. A non-return valve 56 is connected to another output of the stop valve 53b. If the pressure of the test gas or Nitrogen being output from the lower gas leak port 41 via the leakage gas outlet 54 exceeds 0,5 bar, the non-return 56 valve will open an allow the test gas to be leaked into a silencer 57, which is connected to the non-return valve 56. Another upper flexible hose 52 is connected to the upper gas leak port 43 and leading into the liquid in the container 51. An oil drainage pipe 50 is connected to the control oil drainage port 47 of the test unit 33, in order receive any oil being outlet via the control oil drainage port 47. The voltage supply to the electro-magnetic valve 31 of the valve unit 1 can be turned on and off by the on/off contact 32.

The test system 100 illustrated in Fig. 9 comprises an air inlet 100b for inlet of air at a pressure in the range of 7 - 10 bar, which pressurized air is used as input to three pressure control valves, a control oil pressure control valve 108, a sealing oil pressure control valve 115, and a fuel oil pressure control valve 120. A gas inlet 100a is provided for inlet of a test gas in the form of Nitrogen at a pressure in the range of 200-300 bar. The pressurized Nitrogen is supplied to a gas stop valve 110, with a gas pressure control valve 112 being provided for controlling the pressure of the gas being output from the gas stop valve 110 to the gas outlet 100c. A gas pressure relief valve 111 is connected to the gas line connection between the gas stop valve 110 and the gas outlet 100c and the gas pressure can be read from a gas pressure gauge 113.

In order to deliver a test fluid in the form of a hydraulic oil, which may be a mineral hydraulic oil with a viscosity of 10 centistokes (cSt), and oil thank 109 holding the hydraulic oil is provided. An outlet of the oil tank 109 is connected to three air driven pumps, a control oil air driven pump 107 being controlled by the control oil pressure control valve 108, a sealing oil air driven pump 118 being controlled by the sealing oil pressure control valve 115, and a fuel oil air driven pump 123 being controlled by the fuel oil pressure control valve 120. The oil pressure from the control oil air driven pump 107 can be read from a control oil pressure gauge 106, and the oil pressure from the control oil air driven pump 107 can be released by a control oil pressure relief valve 102, in which case released hydraulic oil will flow back to the oil tank 109.

A hydraulic accumulator 105 is provided, which accumulator 105 may be charged by opening or closing a control oil stop valve 103. A control oil pressure safety valve 104 is provided as a safety valve adjusted to a maximum working pressure of 240 bar for the hydraulic accumulator 105 in order to protect the accumulator 105 against too high pressure. The hydraulic accumulator 105 is a membrane type of accumulator. It has a chamber which is divided by a rubber membrane. On one side of the membrane is Nitrogen at a pressure of 120 bar, on the other side of the membrane is hydraulic oil supplied from the control oil air driven pump 107. While the pressure of hydraulic oil is 0 bar, then the whole volume of accumulator is filled with Nitrogen. While applying hydraulic oil at a pressure above 120 bar, then the Nitrogen will start compress, as the hydraulic oil will start filling the volume of hydraulic accumulator. The purpose of the accumulator 105 in the test system 100 is to accumulate hydraulic oil inside with a pressure. While releasing oil pressure it is possible to get a high peak oil flow output from the accumulator 105.

A control oil directional valve 101 is provided for opening or closing of control oil supply from the control oil air drive pump 107 and the hydraulic accumulator 105 to a control oil outlet 100d. While testing the inlet-outlet valve of valve unit 1, it may be necessary to provide control oil with a high flow in a short time through the control oil directional valve 101 to the control oil outlet 100d. The pump 107 is not able to provide the required control oil flow alone, wherefore the high peak control oil delivery from the hydraulic accumulator 105 may be needed.

Sealing oil may be provided from the sealing oil air driven pump 118 to a sealing oil outlet 100e, and the oil pressure from the sealing oil air driven pump 118 can be read from a sealing oil pressure gauge 117, while the oil pressure from the sealing oil air driven pump 118 can be released by a sealing oil pressure relief valve 114, in which case released hydraulic oil will flow back to the oil tank 109. A sealing oil pressure safety valve 116 is provided for protection of the sealing oil pressure gauge 117. The sealing oil pressure safety valve 116 is adjusted to a maximum working pressure of 150 bar at the output side of the sealing oil air driven pump 118. If the sealing oil pressure exceeds the 150 bar, the sealing oil safety valve 116 will open and hydraulic oil will flow back to the oil tank 109.

Fuel oil may be provided from the fuel oil air driven pump 123 to a fuel oil outlet 100f, and the oil pressure from the fuel oil air driven pump 123 can be read from a fuel oil pressure gauge 122, while the oil pressure from the fuel oil air driven pump 123 can be released by a sealing oil pressure relief valve 119, in which case released hydraulic oil will flow back to the oil tank 109. A fuel oil pressure safety valve 121 is provided for protection of the fuel oil pressure gauge 122. The fuel oil pressure safety valve 121 is adjusted to a maximum working pressure of 150 bar at the output side of the fuel oil air driven pump 123. If the fuel oil pressure exceeds the 150 bar, the fuel oil safety valve 121 will open and hydraulic oil will flow back to the oil tank 109.

### Test of inlet-outlet valve of the valve unit 1

For testing of the inlet-outlet valve of the valve unit 1, as illustrated in Fig. 9, there is no need for supply of sealing oil and fuel oil. Test gas in the form of Nitrogen is supplied from the system 100 via the gas outlet 100c to the test gas inlet port 37 of the test unit 33 by use of a Nitrogen hose, and control oil in the form of hydraulic oil is supplied from the system 100 via the control oil outlet 100d to the control oil inlet port 44 of the test unit 33 by use of a control oil high pressure hose.

The purpose of the test is:
1. To verify that the inlet-outlet valve, when being in the closed position by supply of pressurized control oil, opens when the pressure of the supplied test gas exceeds the gas opening pressure for a given control oil pressure.
2. To verify that the inlet-outlet valve, when in the closed position by supply of pressurized control oil, stays closed without leaks when the pressure of the supplied test gas is below a gas opening pressure for a given control oil pressure.
3. To verify that the middle valve body sealing ring 15 and the lower piston sealing ring 17 stays close, when the inlet-outlet valve is in the normally open position without supply of pressurized control oil.
   1. Close control oil pressure relief valve 102.
   2. Set control oil directional valve 101 to open position.
   3. Close control oil stop valve 103.
   4. Increase control oil pressure up to 225 bar by control oil pressure control valve 108.
   5. Open stop valve 53b.
   6. Apply electrical power 24 VDC to the electro-magnetic valve 31, 32. By activating the electro-magnetic valve, the electro-magnetic valve opens for supplying control oil at a control oil pressure of 225 bar, which control oil pressure will reach the cover piston 21, which presses downwards the inlet-outlet valve piston 10 for closing the inlet-outlet valve.
   7. Close gas pressure relief valve 111 and apply Nitrogen by gas control valve 112. Nitrogen pressure is shown on the gas pressure gauge 113. Increase Nitrogen pressure to 149 bar. The Nitrogen pressure of 149 bar is above a gas opening pressure, for which the inlet-outlet valve is configured to open by moving the piston valve seat 11 above the outlet channels 12, when the control oil pressure is 225 bar. When the inlet-outlet valve starts to open, this will be shown as bubbles coming out from the hose 55 in the liquid of the separate container 51.
   8. Increase control oil pressure up to 300 bar by control oil pressure control valve 108. The Nitrogen pressure of 149 bar is below another gas opening pressure, for which the inlet-outlet valve will open when the control oil pressure is 300 bar. Thus, the control oil pressure of 300 bar reaches the cover piston 21, which presses downwards the inlet-outlet valve piston 10 for closing the inlet-outlet valve. There should be no more bubbles in the liquid of the separate container 51.
   9. Increase Nitrogen pressure to 207 bar. The Nitrogen pressure of 207 bar is above the other gas opening pressure, for which the inlet-outlet valve is configured to open by moving the piston valve seat 11 above the outlet channels 12, when the control oil pressure is 300 bar. When the inlet-outlet valve starts to open, this will be shown as bubbles coming out from the hose 55 in the liquid of the separate container 51.
   10. Switch off electric power 24 VDC to the electromagnetic valve 31, 32 to open the inlet-outlet valve for short time and switch on again the electric power 24 VDC to the electro-magnetic valve 31, 32. By de-activating the electromagnetic valve, the electro-magnetic valve closes for supply of control oil at a control oil pressure of 300 bar, whereby the pressure on the cover piston 21 and the inlet-outlet valve piston 10 is relieved for opening the inlet-outlet valve. By re-activating the electro-magnetic valve, the electro-magnetic valve opens again for supplying control oil at a control oil pressure of 300 bar, which control oil pressure will reach the cover piston 21, which presses downwards the inlet-outlet valve piston 10 for closing the inlet-outlet valve. The inlet-outlet valve is thus fully open for a short time with a Nitrogen pressure of 207 bar, whereby Nitrogen blows out the lower gas leak port 41b of the test unit at a gas pressure being high enough to open the non-return valve 56 with Nitrogen entering into the silencer 57. At the same time, Nitrogen will also flow through the leakage gas outlet 54 and via the hose 55 into the liquid of the separate container 51, with bubbles being observed in the liquid.
   11. Decrease Nitrogen pressure from 207 bar to 200 bar. The Nitrogen pressure of 200 bar is just below the gas opening pressure, for which the inlet-outlet valve will open when the control oil pressure is 300 bar. Thus, the control oil pressure of 300 bar reaches the cover piston 21, which presses downwards the inlet-outlet valve piston 10 for closing the inlet-outlet valve. There should be no more bubbles coming out from the hose 55 into the liquid of the separate container 51.
   12. Wait a while to see of any bubbles coming out from the hose 55 into the liquid of the separate container 51. If any bubbles are observed there is a leak at the piston valve seat 11.
   13. Close stop valve 53b.
   14. Switch off electric power 24 VDC to the electromagnetic valve 31, 32 to open the inlet-outlet valve with the piston valve seat 11 being lifted above the valve outlet channels 12. This allows Nitrogen to flow through the valve inlet opening 8 and through the valve outlet channels 12 into the lower fluid space 35. Thus, a high Nitrogen pressure is exercised at the bottom of the piston valve seat 11 and at lower fluid space 35.
   15. It there is a leak in either the lower piston sealing ring 17 or the middle valve body sealing ring 15, Nitrogen will pass the piston sealing ring 17 and the test channels 13 into the upper fluid space 36, or Nitrogen will pass the valve body sealing ring 15 into the upper fluid space 36. From the upper fluid space 36, the Nitrogen will pass through the upper gas leak port 43 and the upper hose 52 into the liquid of the separate chamber 51, with bubbles being observed in the liquid.

The invention has been described in conjunction with various embodiments herein. However, other variations to the disclosed embodiments can be understood and effected by those skilled according to the appended claims.

## Claims

1. A method of testing an inlet-outlet valve being part of a valve unit (1), such as an inlet-outlet normally open valve unit, with the inlet-outlet valve being placed in a test chamber (34) of a test unit (33), wherein the inlet-outlet valve has:
an inlet-outlet valve body (2) surrounding an inlet-outlet valve piston chamber (6) with a valve inlet opening (8) at the bottom, which inlet-outlet valve piston chamber (6) holds an inlet-outlet valve spring (9) and a piston (10) with a piston valve seat (11) formed at a lower end of the inlet-outlet valve piston (10), said valve body (2) having one or more lower valve outlet channels (12) providing a fluid connection from outer wall parts of a lower valve body part (5) to the inlet-outlet valve piston chamber (6); a lower valve body sealing ring (14) provided at the bottom of the valve body (2) and surrounding the valve inlet opening (8); and a middle valve body sealing ring (15) provided at and surrounding a middle part (4) of the valve body above the outlet channels (12);
wherein the valve body (2) with the lower and middle sealing rings (14, 15) is placed in the test chamber (34) with the bottom valve inlet opening (8) facing a test gas outlet (40) at the bottom of the test chamber (34), whereby a lower fluid space (35) is provided in the test chamber (34), said lower fluid space (35) being sealed by the lower and middle valve body sealing rings (14, 15) and being fluidly connected to the valve outlet channels (12), and said test gas outlet (40) and the valve inlet opening (8) being fluidly sealed from the lower fluid space (35) by the lower valve body sealing ring (14);
wherein the test unit holds (33) a lower gas leak port (41b) being fluidly connected to the lower fluid space (35);
wherein the test unit (33) is configured for receiving a test gas and supplying the test gas to the valve inlet opening (8) via the test gas outlet (40) to thereby exercise an upwards pressure on the piston valve seat (11) as a function of a pressure of the supplied test gas; and
wherein the valve unit is configured for receiving a control oil and providing a downwards pressure on the inlet-outlet valve piston (10); **characterized in that**
the inlet-outlet valve is open when the piston valve seat (11) is lifted above the outlet channels (12) to provide a fluid connection from the valve inlet opening (8) to the outer wall parts of the valve body (2) and the inlet-outlet valve is closed when the piston valve seat (11) is pressed below the outlet channels (12);
the test unit (33) is configured for supplying the test gas to thereby exercise the upwards pressure on the piston valve seat (11) within the inlet-outlet valve piston chamber (6);
the valve unit is configured for providing the downwards pressure on the inlet-outlet valve piston (10) holding the piston valve seat (11) within the inlet-outlet valve piston chamber (6) as a function of a pressure of the received control oil; and **in that**
said method of testing the inlet-outlet valve comprises a first opening test of the inlet-outlet valve, which first opening test comprises:
supplying control oil at a first control oil pressure to the valve unit (1), said first control oil pressure being high enough for the valve unit (1) to close the inlet-outlet valve by moving the piston valve seat (11) downwards below the outlet channels (12);
supplying a test gas at a first closure gas pressure to the valve inlet opening (8) via the test gas outlet (40) of the test unit (33), said first closure gas pressure being below a first gas opening pressure for the which the inlet-outlet valve is configured to start opening by moving the piston valve seat (11) above the outlet channels (12) when the control oil is supplied to the valve unit (1) at the first control oil pressure;
increasing the test gas supply pressure from the first closure gas pressure until the pressure reaches the first gas opening pressure; and
checking the amount of test gas reaching out through the lower gas leak port (41b).

2. A method according to claim 1, said method further comprising a second opening test of the inlet-outlet valve, which second opening test comprises:
supplying control oil to the valve unit (1) at a second control oil pressure being different to the first control oil pressure;
supplying test gas to the valve inlet opening (8) via the test gas outlet (40) at a second closure gas pressure, said second closure gas pressure being below a second gas opening pressure for the which the inlet-outlet valve is configured to start opening when the control oil is supplied at the second control oil pressure;
increasing the test gas supply pressure from the second closure gas pressure until the pressure reaches the second gas opening pressure; and
checking the amount of test gas reaching out through the lower gas leak port (41b).

3. A method according to claim 2, wherein the second control oil pressure is lower than the first control oil pressure, such as in the range of 60 to 80% of the first control oil pressure, or wherein the first control oil pressure is lower than the second control oil pressure, such as in the range of 60 to 80% of the second control oil pressure;
wherein the first closure gas pressure is not lower than 90%, such as not lower than 95% of the first gas opening pressure; and
wherein the second closure gas pressure is not lower than 90%, such as not lower than 95% of the second gas opening pressure.

4. A method according to any one of the claims 1 to 3, wherein the valve unit (1) is fluidly connected to an electro-magnetic valve (31) for the supply of control oil, and wherein the electro-magnetic valve (31) is configured for opening for the supply of control oil to the valve unit (1) when activated and for closing for the supply of control oil to the valve unit when de-activated.

5. A method according to claim 4, wherein the valve unit (1) comprises a top cover (19) holding a cover piston chamber (20) with a cover piston (21), which cover piston chamber (20) is fluidly connected to the electro-magnetic valve (31) for receiving the control oil, and which cover piston (21) reaches out from the cover piston chamber (20) to a top part of the inlet-outlet valve piston (10), whereby when the electro-magnetic valve (31) is activated and control oil is supplied at a control oil pressure to the cover piston chamber (20), a downwards pressure is exercised by the cover piston (21) on the inlet-outlet valve piston (10) holding the piston valve seat (11) within the inlet-outlet valve piston chamber (6).

6. A method according to any of the claims 1 to 5, wherein the test gas is Nitrogen.

## Patentansprüche

1. Verfahren zum Testen eines Einlass-Auslass-Ventils, das Teil einer Ventileinheit (1) ist, wie etwa einer normalerweise offenen Einlass-Auslass-Ventileinheit, wobei das Einlass-Auslass-Ventil in einer Testkammer (34) einer Testeinheit (33) platziert ist, wobei das Einlass-Auslass-Ventil aufweist:
einen Einlass-Auslass-Ventilkörper (2), der eine Einlass-Auslass-Ventilkolbenkammer (6) mit einer Ventileinlassöffnung (8) an dem Boden umgibt, wobei die Einlass-Auslass-Ventilkolbenkammer (6) eine Einlass-Auslass-Ventilfeder (9) und einen Kolben (10) mit einem Kolbenventilsitz (11), der an einem unteren Ende des Einlass-Auslass-Ventilkolbens (10) gebildet ist, hält, wobei der Ventilkörper (2) einen oder mehrere untere Ventilauslasskanäle (12) aufweist, die eine Fluidverbindung von äußeren Wandteilen eines unteren Ventilkörperteils (5) zu der Einlass-Auslass-Ventilkolbenkammer (6) bereitstellen; einen unteren Ventilkörperdichtungsring (14), der an dem Boden des Ventilkörpers (2) vorgesehen ist und die Ventileinlassöffnung (8) umgibt; und einen mittleren Ventilkörperdichtungsring (15), der an einem mittleren Teil (4) des Ventilkörpers oberhalb der Auslasskanäle (12) vorgesehen ist und diesen umgibt;
wobei der Ventilkörper (2) mit dem unteren und mittleren Dichtungsring (14, 15) in der Testkammer (34) platziert ist, wobei die untere Ventileinlassöffnung (8) einem Testgasauslass (40) an dem Boden der Testkammer (34) zugewandt ist, wodurch ein unterer Fluidraum (35) in der Testkammer (34) vorgesehen ist, wobei der untere Fluidraum (35) durch den unteren und mittleren Ventilkörperdichtungsring (14, 15) abgedichtet ist und mit den Ventilauslasskanälen (12) fluidverbunden ist, und wobei der Testgasauslass (40) und die Ventileinlassöffnung (8) durch den unteren Ventilkörperdichtungsring (14) von dem unteren Fluidraum (35) fluidabgedichtet sind;
wobei die Testeinheit (33) eine untere Gaslecköffnung (41b) aufweist, die mit dem unteren Fluidraum (35) fluidverbunden ist;
wobei die Testeinheit (33) eingerichtet ist, um ein Testgas aufzunehmen und das Testgas über den Testgasauslass (40) der Ventileinlassöffnung (8) zuzuführen, um dadurch einen Aufwärtsdruck auf den Kolbenventilsitz (11) als Funktion eines Drucks des zugeführten Testgases auszuüben; und
wobei die Ventileinheit eingerichtet ist, um ein Steueröl aufzunehmen und einen Abwärtsdruck auf den Einlass-Auslass-Ventilkolben (10) aufzubringen; **dadurch gekennzeichnet, dass**
das Einlass-Auslass-Ventil geöffnet ist, wenn der Kolbenventilsitz (11) über die Auslasskanäle (12) angehoben wird, um eine Fluidverbindung von der Ventileinlassöffnung (8) zu den Außenwandteilen des Ventilkörpers (2) bereitzustellen, und das Einlass-Auslass-Ventil geschlossen ist, wenn der Kolbenventilsitz (11) unter die Auslasskanäle (12) gedrückt wird;
die Testeinheit (33) eingerichtet ist, um das Testgas zuzuführen, um dadurch den Aufwärtsdruck auf den Kolbenventilsitz (11) innerhalb der Einlass-Auslass-Ventilkolbenkammer (6) auszuüben;
die Ventileinheit eingerichtet ist, um den Abwärtsdruck auf den Einlass-Auslass-Ventilkolben (10), der den Kolbenventilsitz (11) in der Einlass-Auslass-Ventilkolbenkammer (6) hält, als eine Funktion eines Drucks des aufgenommenen Steueröls bereitzustellen; und dadurch, dass
das Verfahren zum Testen des Einlass-Auslass-Ventils einen ersten Öffnungstest des Einlass-Auslass-Ventils umfasst, wobei der erste Öffnungstest umfasst:
Zuführen von Steueröl mit einem ersten Steueröldruck zu der Ventileinheit (1), wobei der erste Steueröldruck hoch genug ist, damit die Ventileinheit (1) das Einlass-Auslass-Ventil schließt, indem der Kolbenventilsitz (11) nach unten unter die Auslasskanäle (12) bewegt wird;
Zuführen eines Testgases mit einem ersten Schließgasdruck zu der Ventileinlassöffnung (8) über den Testgasauslass (40) der Testeinheit (33), wobei der erste Schließgasdruck unter einem ersten Gasöffnungsdruck liegt, für den das Einlass-Auslass-Ventil eingerichtet ist, um mit einem Öffnen zu beginnen, indem der Kolbenventilsitz (11) über die Auslasskanäle (12) bewegt wird, wenn das Steueröl der Ventileinheit (1) mit dem ersten Steueröldruck zugeführt wird;
Erhöhen des Testgaszufuhrdrucks von dem ersten Schließgasdruck, bis der Druck den ersten Gasöffnungsdruck erreicht; und
Überprüfen der Testgasmenge, die durch die untere Gaslecköffnung (41b) austritt.

2. Verfahren nach Anspruch 1, wobei das Verfahren ferner einen zweiten Öffnungstest des Einlass-Auslass-Ventils umfasst, wobei der zweite Öffnungstest umfasst:
Zuführen von Steueröl zu der Ventileinheit (1) mit einem zweiten Steueröldruck, der sich von dem ersten Steueröldruck unterscheidet;
Zuführen von Testgas zu der Ventileinlassöffnung (8) über den Testgasauslass (40) mit einem zweiten Schließgasdruck, wobei der zweite Schließgasdruck unter einem zweiten Gasöffnungsdruck liegt, für den das Einlass-Auslass-Ventil eingerichtet ist, um mit einem Öffnen zu beginnen, wenn das Steueröl mit dem zweiten Steueröldruck zugeführt wird;
Erhöhen des Testgaszufuhrdrucks von dem zweiten Schließgasdruck, bis der Druck den zweiten Gasöffnungsdruck erreicht; und
Überprüfen der Testgasmenge, die durch die untere Gaslecköffnung (41b) austritt.

3. Verfahren nach Anspruch 2, wobei der zweite Steueröldruck niedriger ist als der erste Steueröldruck, wie etwa im Bereich von 60 bis 80 % des ersten Steueröldrucks, oder wobei der erste Steueröldruck niedriger ist als der zweite Steueröldruck, wie etwa im Bereich von 60 bis 80 % des zweiten Steueröldrucks;
wobei der erste Schließgasdruck nicht weniger als 90 %, wie etwa nicht weniger als 95 %, des ersten Gasöffnungsdrucks beträgt; und
wobei der zweite Schließgasdruck nicht weniger als 90 %, wie etwa nicht weniger als 95 %, des zweiten Gasöffnungsdrucks beträgt.

4. Verfahren nach einem der Ansprüche 1 bis 3, wobei die Ventileinheit (1) mit einem elektromagnetischen Ventil (31) für die Zufuhr von Steueröl fluidverbunden ist, und wobei das elektromagnetische Ventil (31) eingerichtet ist zum Öffnen für die Zufuhr von Steueröl zu der Ventileinheit (1), wenn es aktiviert ist, und zum Schließen für die Zufuhr von Steueröl zu der Ventileinheit, wenn es deaktiviert ist.

5. Verfahren nach Anspruch 4, wobei die Ventileinheit (1) eine obere Abdeckung (19) umfasst, die eine Abdeckkolbenkammer (20) mit einem Abdeckkolben (21) hält, wobei die Abdeckkolbenkammer (20) mit dem elektromagnetischen Ventil (31) zum Aufnehmen des Steueröls fluidverbunden ist, und wobei der Abdeckkolben (21) von der Abdeckkolbenkammer (20) bis zu einem oberen Teil des Einlass-Auslass-Ventilkolbens (10) reicht, wobei, wenn das elektromagnetische Ventil (31) aktiviert ist und Steueröl mit einem Steueröldruck der Abdeckkolbenkammer (20) zugeführt wird, ein Abwärtsdruck durch den Abdeckkolben (21) auf den Einlass-Auslass-Ventilkolben (10) ausgeübt wird, der den Kolbenventilsitz (11) innerhalb der Einlass-Auslass-Ventilkolbenkammer (6) hält.

6. Verfahren nach einem der Ansprüche 1 bis 5, wobei das Testgas Stickstoff ist.

## Revendications

1. Procédé de test d'une soupape d'admission/refoulement faisant partie d'une unité de soupape (1), telle qu'une unité de soupape normalement ouverte d'admission/refoulement, la soupape d'admission/refoulement étant placée dans une chambre de test (34) d'une unité de test (33), dans lequel la soupape d'admission/refoulement comporte :
un corps de soupape d'admission/refoulement (2) entourant une chambre de piston de soupape d'admission/refoulement (6) avec une ouverture d'admission de soupape (8) dans le fond, ladite chambre de piston de soupape d'admission/refoulement (6) contenant un ressort de soupape d'admission/refoulement (9) et un piston (10) avec un siège de soupape à piston (11) formé à une extrémité inférieure du piston de soupape d'admission/refoulement (10), ledit corps de soupape (2) comportant un ou plusieurs canaux de refoulement de soupape inférieurs (12) fournissant une communication fluidique depuis des parties de paroi extérieures d'une partie de corps de soupape inférieure (5) vers la chambre de piston de soupape d'admission/refoulement (6) ; une bague d'étanchéité de corps de soupape inférieure (14) disposée sur le bas du corps de soupape (2) et entourant l'ouverture d'admission de soupape (8) ; et une bague d'étanchéité de corps de soupape centrale (15) disposée au niveau d'une partie centrale (4) du corps de soupape au-dessus des canaux de refoulement (12) et entourant celle-ci ;
dans lequel le corps de soupape (2) doté des bagues d'étanchéité inférieure et centrale (14, 15) est placé dans la chambre de test (34) avec l'ouverture d'admission de soupape inférieure (8) tournée vers une sortie de gaz de test (40) au fond de la chambre de test (34), moyennant quoi un espace de fluide inférieur (35) est créé dans la chambre de test (34), ledit espace de fluide inférieur (35) étant étanchéifié par les bagues d'étanchéité de corps de soupape inférieure et centrale (14, 15) et étant relié fluidiquement aux canaux de refoulement de soupape (12), et ladite sortie de gaz de test (40) et l'ouverture d'admission de soupape (8) étant rendues étanches fluidiquement par rapport à l'espace de fluide inférieur (35) par la bague d'étanchéité de corps de soupape inférieure (14) ;
dans lequel l'unité de test (33) contient un orifice d'échappement de gaz inférieur (41b) relié fluidiquement à l'espace de fluide inférieur (35) ;
dans lequel l'unité de test (33) est configurée pour recevoir un gaz de test et pour alimenter le gaz de test vers l'ouverture d'admission de soupape (8) par le biais de la sortie de gaz de test (40) pour ainsi exercer une pression ascendante sur le siège de soupape à piston (11) en fonction d'une pression du gaz de test acheminé ; et
dans lequel l'unité de soupape est configurée pour recevoir une huile de commande et pour fournir une pression descendante sur le piston de soupape d'admission/refoulement (10) ; **caractérisé en ce que**
la soupape d'admission/refoulement est ouverte lorsque le siège de soupape à piston (11) est relevé au-dessus des canaux de refoulement (12) pour fournir une communication fluidique depuis l'ouverture d'admission de soupape (8) vers les parties de paroi extérieures du corps de soupape (2) et la soupape d'admission/refoulement est fermée lorsque le siège de soupape à piston (11) est poussé sous les canaux de refoulement (12) ;
l'unité de test (33) est configurée pour alimenter le gaz de test pour ainsi exercer la pression ascendante sur le siège de soupape à piston (11) à l'intérieur de la chambre de piston de soupape d'admission/refoulement (6) ;
l'unité de soupape est configurée pour fournir la pression descendante sur le piston de soupape d'admission/refoulement (10) maintenant le siège de soupape à piston (11) à l'intérieur de la chambre de piston de soupape d'admission/refoulement (6) en fonction d'une pression de l'huile de commande reçue ; et **en ce que**
ledit procédé de test de soupape d'admission/refoulement comprend un premier test d'ouverture de la soupape d'admission/refoulement, ledit premier test d'ouverture comprenant :
l'alimentation d'huile de commande à une première pression d'huile de commande vers l'unité de soupape (1), ladite première pression d'huile de commande étant suffisamment élevée pour amener l'unité de soupape (1) à fermer la soupape d'admission/refoulement en déplaçant le siège de soupape à piston (11) vers le bas sous les canaux de refoulement (12) ;
l'alimentation d'un gaz de test à une première pression de gaz de fermeture vers l'ouverture d'admission de soupape (8) par le biais de la sortie de gaz de test (40) de l'unité de test (33), ladite première pression de gaz de fermeture étant inférieure à une première pression de gaz d'ouverture à laquelle la soupape d'admission/refoulement est configuré pour commencer à s'ouvrir par déplacement du siège de soupape à piston (11) au-dessus des canaux de refoulement (12) lorsque l'huile de commande est alimentée vers l'unité de soupape (1) à la première pression d'huile de commande ;
l'augmentation de la pression d'alimentation de gaz de test à partir de la première pression de gaz de fermeture jusqu'à ce que la pression atteigne la première pression de gaz d'ouverture ; et
la vérification de la quantité de gaz de test sortant par l'orifice d'échappement de gaz inférieur (41b).

2. Procédé selon la revendication 1, ledit procédé comprenant en outre un deuxième test d'ouverture de la soupape d'admission/refoulement, ledit deuxième test d'ouverture comprenant :
l'alimentation d'huile de commande vers l'unité de soupape (1) à une deuxième pression d'huile de commande différente de la première pression d'huile de commande ;
l'alimentation de gaz de test vers l'ouverture d'admission de soupape (8) par le biais de la sortie de gaz de test (40) à une deuxième pression de gaz de fermeture, ladite deuxième pression de gaz de fermeture étant inférieure à une deuxième pression d'ouverture de gaz à laquelle la soupape d'admission/refoulement est configurée pour commencer à s'ouvrir lorsque l'huile de commande est alimentée à la deuxième pression d'huile de commande ;
l'augmentation de la pression d'alimentation de gaz de test à partir de la deuxième pression de gaz de fermeture jusqu'à ce que la pression atteigne la deuxième pression d'ouverture de gaz ; et
la vérification de la quantité de gaz de refroidissement sortant par l'orifice d'échappement de gaz inférieur (41b) .

3. Procédé selon la revendication 2, dans lequel la deuxième pression d'huile de commande est inférieure à la première pression d'huile de commande, telle que dans la plage de 60 à 80 % de la première pression d'huile de commande, ou dans lequel la première pression d'huile de commande est inférieure à la deuxième pression d'huile de commande, telle que dans la plage de 60 à 80 % de la deuxième pression d'huile de commande ;
dans lequel la première pression de gaz de fermeture n'est pas inférieure à 90 %, telle que pas inférieure à 95 % de la première pression d'ouverture de gaz ; et
dans lequel la deuxième pression de gaz de fermeture n'est pas inférieure à 90 %, telle que pas inférieure à 95 % de la deuxième pression d'ouverture de gaz.

4. Procédé selon l'une quelconque des revendications 1 à 3, dans lequel l'unité de soupape (1) est reliée fluidiquement à une soupape électromagnétique (31) destinée à alimenter de l'huile de commande, et dans lequel la soupape électromagnétique (31) est configurée pour s'ouvrir pour l'alimentation de l'unité de soupape (1) en huile de commande lorsqu'elle est activée et pour arrêter l'alimentation de l'unité de soupape en huile de commande lorsqu'elle est désactivée.

5. Procédé selon la revendication 4, dans lequel l'unité de soupape (1) comprend un couvercle supérieur (19) contenant une chambre de piston de couvercle (20) avec un piston de couvercle (21), ladite chambre de piston de couvercle (20) est reliée fluidiquement à la soupape électromagnétique (31) pour recevoir l'huile de commande, et ledit piston de couvercle (21) sort de la chambre de piston de couvercle (20) vers une partie supérieure du piston de soupape d'admission/refoulement (10), moyennant quoi, lorsque la soupape électromagnétique (31) est activée et que de l'huile de commande est alimentée à une pression d'huile de commande vers la chambre de piston de couvercle (20), une pression descendante est exercée par le piston de couvercle (21) sur le piston de soupape d'admission/refoulement (10) maintenant le siège de soupape à piston (11) à l'intérieur de la chambre de piston de soupape d'admission/refoulement (6).

6. Procédé selon l'une quelconque des revendications 1 à 5, dans lequel le gaz de test est de l'azote.
